# EUROPEAN PATENT APPLICATION

(11) **EP 3 875 802 A1**
(43) Date of publication of application: **08.09.2021**
(21) Application number: 21158567.4
(22) Date of filing: 23.02.2021
(51) Int. Cl.: F16H 1/32, B60K 17/04

(54) **WHEEL DRIVE DEVICE**

(30) Priority: 02.03.2020 JP 2020035002
(71) Applicant: Sumitomo Heavy Industries, Ltd., Tokyo 141-6025 (JP)
(72) Inventor: NAGAO, Yuki, Obu-shi Aichi, 474-8501, (JP); ISOZAKI, Tetsushi, Obu-shi Aichi, 474-8501, (JP)
(74) Representative: Louis Pöhlau Lohrentz

(57) **Abstract**

Provided is a wheel drive device (100, 200) capable of increasing an allowable radial load. A wheel drive device (100, 200) of a certain aspect includes an internal gear (16) that is integrated with a casing (21, 22, 23); an external gear (14); an eccentric body (12a) that oscillates the external gear (14) ; an output flange (18) that is disposed at a side portion in an axial direction of the external gear (14); a pin member (32, 33) that is supported by the output flange (18) and penetrates the external gear (14); and a first main bearing (24) that is disposed between the output flange (18) and the casing (21, 22, 23). A wheel (50) is connected to the output flange (18). An inner diameter of an inner ring (24n, 26n) of the first main bearing (24) is larger than an inscribed circle diameter of the pin member (32, 33).

## Description

### BACKGROUND OF THE INVENTION

### Field of the Invention

The present invention relates to a wheel drive device.

### Description of Related Art

Driving devices that drive wheels by a motor and a reduction mechanism are known. For example, Japanese Unexamined Patent Publication No. 2011-117577 describes a wheel driving device that reduces the speed of the rotation of a motor and transmits it to an output shaft to drive a wheel hub. This device includes a motor unit, a speed reduction unit, and a wheel hub bearing unit. The speed reduction unit includes a casing-side member, an output shaft inserted into the casing-side member, and a bearing provided in the casing-side member to support the output shaft.

### SUMMARY OF THE INVENTION

For example, in a transport cart, a driving device including a reduction mechanism is installed to drive a wheel of the cart. In this cart, the weight of the cart and the weight of a transport object may directly act on an output member of the reduction mechanism connected to the wheel, and transportable weight is limited by the allowable radial load of the reduction mechanism. From the viewpoint of improving durability, it is desirable that the allowable radial load of the reduction mechanism is large for this cart. However, in the wheel driving device described in Japanese Unexamined Patent Publication No. 2011-117577, the allowable radial load of the reduction mechanism is not considered. Such a problem may occur not only in the transport cart but also in other types of wheel drive devices.

The present invention has been made in view of such a problem, and an object of the present invention is to provide a wheel drive device capable of increasing an allowable radial load.

In order to solve the above problems, a wheel drive device according to an aspect of the present invention includes an internal gear that is integrated with a casing; an external gear; an eccentric body that oscillates the external gear; an output flange that is disposed at a side portion in an axial direction of the external gear; a pin member that is supported by the output flange and penetrates the external gear; and a first main bearing that is disposed between the output flange and the casing. A wheel is connected to the output flange. An inner diameter of an inner ring of the first main bearing is larger than an inscribed circle diameter of the pin member.

In addition, any combinations of the above-described components and mutual substitutions of the components and expressions of the present invention between methods, systems, and the like are also effective as aspects of the present invention.

According to the present invention, it is possible to provide the wheel drive device capable of increasing the allowable radial load.

### BRIEF DESCRIPTION OF THE DRAWINGS

FIG. 1 is a cross-sectional side view illustrating a wheel drive device according to a first embodiment.
FIG. 2 is a view illustrating an output flange and a carrier of the wheel drive device of FIG. 1.
FIG. 3 is a view schematically illustrating the disposition of a main bearing of the wheel drive device of FIG. 1.
FIG. 4 is a cross-sectional side view illustrating a wheel drive device according to a second embodiment.
FIG. 5 is a view illustrating an output flange and a carrier of the wheel drive device of FIG. 4.
FIG. 6 is a view schematically illustrating the disposition of a main bearing of the wheel drive device of FIG. 4.

### DETAILED DESCRIPTION OF THE INVENTION

Hereinafter, the present invention will be described with reference to the drawings based on the preferred embodiments. In the embodiments and modification examples, the same or equivalent components and members will be designated by the same reference numerals, and redundant description will be omitted as appropriate. Additionally, the dimensions of the members in the respective drawings are appropriately illustrated in an enlarged or reduced manner for easy understanding. Additionally, some of the members that are not important for explaining the embodiments in the respective drawings are omitted and displayed.

Additionally, terms including ordinal numbers, such as first and second, are used to describe various components. However, the terms are used only for the purpose of distinguishing one component from another component, and the components are not limited by the terms.

### [First Embodiment]

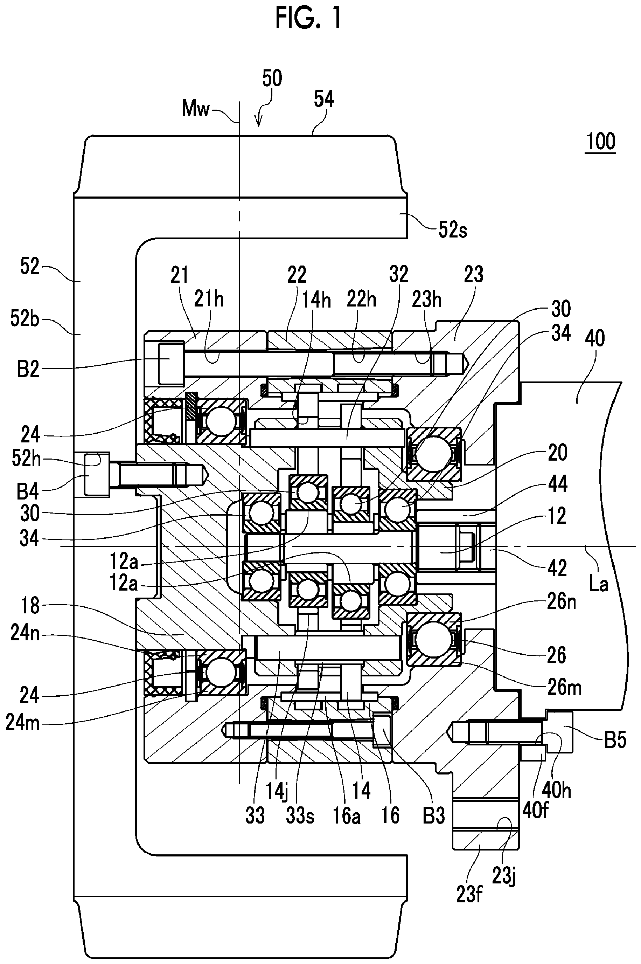

Hereinafter, the configuration of a wheel drive device 100 according to a first embodiment of the present disclosure will be described with reference to FIG. 1. FIG. 1 is a cross-sectional side view schematically illustrating the wheel drive device 100 of the present embodiment.

The wheel drive device 100 is a driving device for driving the wheels of an unmanned carrier or the like that places a transport object on a cart to transport the transport object. In addition, the wheel drive device 100 is not limited to the unmanned carrier and can be applied to wheel drive devices of various vehicles. The wheel drive device 100 reduces the speed of the rotation input from the motor 40 to rotationally drive awheel 50. In the wheel drive device 100, the wheel 50 is connected to an output flange 18.

Hereinafter, a direction along a central axis line La of the output flange 18 is referred to as an "axial direction", and a circumferential direction and a radial direction of a circle centered on the central axis line La are referred to as a "circumferential direction" and a "radial direction", respectively. Additionally, hereinafter, for convenience, one side in the axial direction (right side in the figure) is referred to as an input side, and the other side (left side in the figure) is referred to as an anti-input side. The motor 40 is disposed on the input side of the wheel drive device 100, and the wheel 50 is disposed on the anti-input side of the wheel drive device 100.

The wheel drive device 100 mainly includes an input shaft 12, an external gear 14, an internal gear 16, an output flange 18, a carrier 20, casings 21, 22, and 23, main bearings 24 and 26, pin members 32 and 33, and the wheel 50. The present embodiment includes a center crank type reduction mechanism in which the input shaft 12 is provided on the same axis with the central axis line of the internal gear 16.

The casings 21, 22, and 23 are hollow cylindrical members that surround the output flange 18 and the carrier 20, and constitute an outer shell of the reduction mechanism. In the example of FIG. 1, the casings 21, 22, and 23 include a first casing 21 provided on the anti-input side, a third casing 23 provided on the input side, and a second casing 22 provided between the first casing 21 and the third casing 23.

The main bearings 24 and 26 includes a first main bearing 24 disposed at a side portion of the external gear 14 on the anti-input side, and a second main bearing 26 disposed at a side portion of the external gear 14 on the input side. The output flange 18 and the carrier 20 are disposed inside the casings 21, 22, and 23 and rotate relative to the casings 21, 22, and 23. The input shaft 12 is connected to the motor shaft 42 of the motor 40 by a cylindrical connection member 44, and has the rotation of the motor 40 transmitted thereto.

The internal gear 16 is integrated with the second casing 22. The external gear 14 meshes with the internal gear 16. An eccentric body 12a of the input shaft 12 oscillates the external gear 14. The output flange 18 is disposed at a side portion of the external gear 14 on the anti-input side in the axial direction and is synchronized with an axial rotation component of the external gear 14. The carrier 20 is disposed at the side portion of the external gear 14 on the input side. The pin members 32 and 33 are supported by the output flange 18 and the carrier 20 and penetrate the external gear 14. The pin members 32 and 33 connect the output flange 18 and the carrier 20 to each other. The first main bearing 24 is disposed between the output flange 18 and the first casing 21. The second main bearing 26 is disposed between the carrier 20 and the third casing 23. The wheel 50 is connected to the output flange. The details will be described below.

The input shaft 12 functions as a crankshaft having a plurality of eccentric bodies 12a for oscillating the external gear 14. In this example, the input shaft 12 has two eccentric bodies 12a whose phases are shifted from each other by 180°. Both end portions of the input shaft 12 are supported by the output flange 18 and the carrier 20 via a pair of input shaft bearing 34 and 34.

The external gear 14 is rotatably supported by the input shaft 12 via an eccentric bearing 30. The external gear 14 has a plurality of pin through-holes 14j and 14h formed at positions offset from an axial center thereof. The pin members 32 and 33 are inserted through the pin through-holes 14j and 14h. As external teeth formed at an outer periphery of the external gear 14 rotate while meshing with the internal teeth of the internal gear 16, the external gear 14 oscillates.

The internal gear 16 is a member that has internal teeth meshing with the external gear 14 and rotates relative to the external gear 14 on the basis of the oscillating rotation of the external gear 14. The internal teeth of the present embodiment have outer pins 16a disposed in pin grooves (not illustrated) formed at an inner peripheral portion of the casing 22. The number of outer pins 16a (the number of internal teeth) of the internal gear 16 is one more than the number of external teeth of the external gear 14 in the present embodiment.

The output flange 18 and the carrier 20 are rotatably supported by the casings 21, 22, and 23 via the first main bearing 24 and the second main bearing 26. The output flange 18 and the carrier 20 support the input shaft 12 via the input shaft bearings 34. The output flange 18 and the carrier 20 are disposed apart from each other on the anti-input side and the input side of the external gear 14 and are connected to each other via the pin members 32 and 33. The pin members 32 and 33 penetrate the pin through-holes 14j and 14h of the external gear 14 in the axial direction at positions offset in the radial direction from the axis of the external gear 14. The pin members 32 and 33 in this example are cylindrical members.

One of the output flange 18 and the casings 21, 22, and 23 functions as an output member that outputs rotational power to a wheel driven device, and the other functions as a fixed member fixed to an external member for supporting the wheel drive device 100. In the present embodiment, the output member is the output flange 18, and the fixed member are the casings 21, 22, and 23.

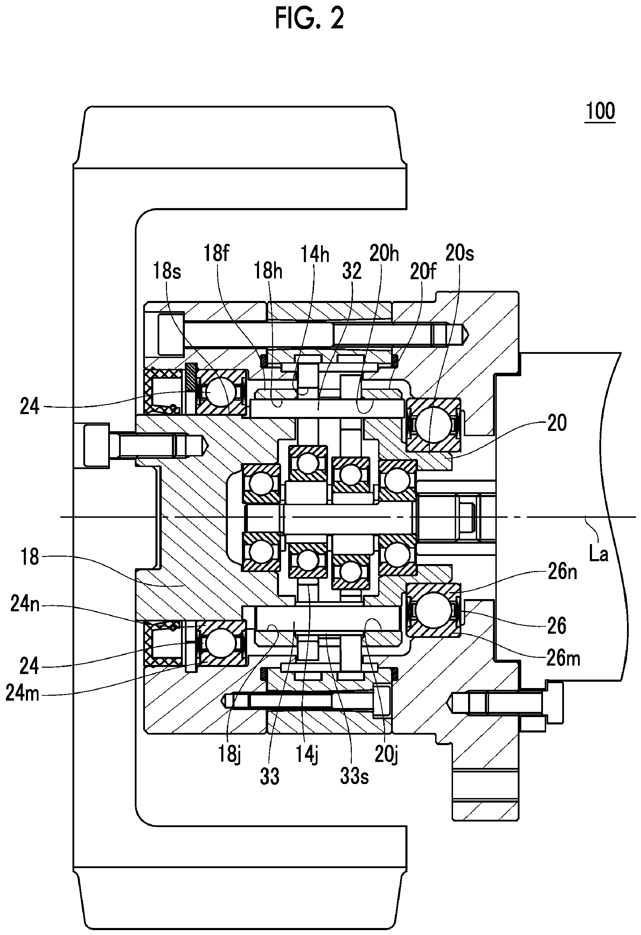

The output flange 18 and the carrier 20 will be described with reference to FIG. 2. FIG. 2 is a view illustrating the output flange 18 and the carrier 20. In addition, in FIG. 2, the cross-sectional view itself is the same as that in FIG. 1, and the reference numerals are different from those in FIG. 1. The output flange 18 has a fitting portion 18s that fits into an inner ring 24n of the first main bearing 24, and a large-diameter portion 18f having a diameter larger than that of the fitting portion 18s. The large-diameter portion 18f is provided with a plurality of pin hole portions 18h and 18j that penetrate in the axial direction. The pin hole portions 18h are provided at predetermined intervals in the circumferential direction on the same circumference and have the pin members 32 fitted thereinto and supported thereby. The pin members 32 may be rotatably supported by being clearance-fitted into the pin hole portions 18h. The pin hole portions 18j are provided at predetermined intervals in the circumferential direction on the same circumference and have the pin members 33 fitted thereinto and supported thereby. The pin members 33 may be fixed to the pin hole portions 18j by press fitting or the like. In the example of FIG. 2, an end portion (end face) of the large-diameter portion 18f on the anti-input side faces the first main bearing 24 in the axial direction. An end portion (end face) of the large-diameter portion 18f on the input side faces the external gear 14 in the axial direction.

The carrier 20 has a fitting portion 20s fitted to the second main bearing 26 and a large-diameter portion 20f having a diameter larger than that of the fitting portion 20s. The large-diameter portion 20f is provided with a plurality of pin hole portions 20h and 20j that penetrate in the axial direction. The pin hole portions 20h are provided at predetermined intervals in the circumferential direction on the same circumference and have the pin members 32 fitted thereinto and supported thereby. The pin members 32 may be rotatably supported by being clearance-fitted into the pin hole portions 20h. The pin hole portions 20j are provided at predetermined intervals in the circumferential direction on the same circumference and have the pin members 33 fitted thereinto and supported thereby. An end portion (end face) of the large-diameter portion 20f on the input side faces the second main bearing 26 in the axial direction. An end portion (end face) of the large-diameter portion 20f on the input side faces the external gear 14 in the axial direction.

As illustrated in FIG. 1, the main bearings 24 and 26 are disposed between the output flange 18 and the casing 21 and between the carrier 20 and the casing 23. The main bearings 24 and 26 of this example have inner rings 24n and 26n, outer rings 24m and 26m, and spherical rolling elements. The outer rings 24m and 26m of the main bearings 24 and 26 are supported by the casings 21 and 23. The inner rings 24n and 26n of the main bearings 24 and 26 are supported by the output flange 18 and the carrier 20.

The pin members 32 are inner pins that transmit the axial rotation component of the external gear to the output flange. In this example, six pin members 32 are disposed at intervals of 60° in the circumferential direction. FIG. 1 illustrates one pin member 32. The pin member 32 is supported by the output flange 18 on the anti-input side and supported by the carrier 20 on the input side. The pin member 32 abuts against a part of each pin through-hole 14h. The pin member 32 constrains the rotation of the external gear 14 and allow only the oscillation thereof. In addition, the number of pin members 32 is not limited to six and may be a plurality of pin members.

The pin members 33 are carrier pins that connect the output flange 18 and the carrier 20 to each other without contributing to the transmission of the axial rotation component of the external gear 14. In this example, three pin members 33 are disposed at intervals of 120° in the circumferential direction. FIG. 1 illustrates one pin member 33. The pin member 33 is supported by the output flange 18 on the anti-input side and by the carrier 20 on the input side. A spacer 33s is provided at an outer periphery of the pin member 33. The spacer 33s is a cylindrical member that maintains the output flange 18 and the carrier 20 at a predetermined interval. The pin member 33 and the spacer 33s are inserted into the pin through-hole 14j with a gap. In addition, the number of pin members 33 is not limited to three and may be two or four or more.

The motor 40 may be any motor that can input a rotational driving force to the wheel drive device 100, and motor based on various principles can be adopted. In this example, the motor 40 is a servo motor. The motor 40 includes a motor flange 40f having a bolt hole 40h. In the motor 40, the motor flange 40f is fixed to an input-side end surface of the third casing 23 by the bolt B5.

The casings 21, 22, and 23 have bolt holes 21h, 22h, and 23h drill in the axial direction, respectively. A plurality of the bolt holes 21h, 22h, and 23h are provided at predetermined intervals in the circumferential direction. As illustrated in FIG. 1, the casings 21, 22, and 23 are integrated as a bolt B2 penetrates the bolt holes 21h and 22h and is screwed into the bolt holes 23h. The second casing 22 is fixed to the first casing 21 by a bolt B3. The third casing 23 has a casing flange 23f that protrudes radially outward. The casing flange 23f is provided with a flange hole 23j that penetrates in the axial direction. The casing flange 23f is connected to an external member.

The wheel 50 will be described. The wheel 50 includes a wheel hub 52 and a tire 54 provided at an outer periphery of the wheel hub 52. The wheel hub 52 has a disc-shaped disc portion 52b and a hollow cylindrical rim portion 52s provided at an outer periphery of the disc portion 52b. A plurality of bolt holes 52h are provided in the circumferential direction at positions offset from the center of the disc portion 52b. The wheel 50 is fixed to the output flange 18 by a bolt B4 penetrating each bolt hole 52h. The tire 54 may be made of metal or may be made of non-metal such as resin. The tire 54 of the present embodiment is made of rubber.

In the present embodiment, a center position Mw of the axial width of the wheel 50 is closer to the first main bearing 24 than to the second main bearing 26. The center position Mw of the axial width is located on a straight line that bisects the wheel 50 in the axial direction. In this case, since the proportion of a wheel load supported by the first main bearing 24 is increased and the proportion of a wheel load applied to the second main bearing 26 decreases relatively, a bearing having a low load-bearing performance can be adopted as the second main bearing 26. In the example of FIG. 1, the rim portion 52s has a rim width such that the rim portion substantially surrounds the pin members 32 and 33 of the wheel drive device 100. In this case, since the wheel drive device 100 is generally accommodated in the wheel 50, the overall axial dimension decreases accordingly.

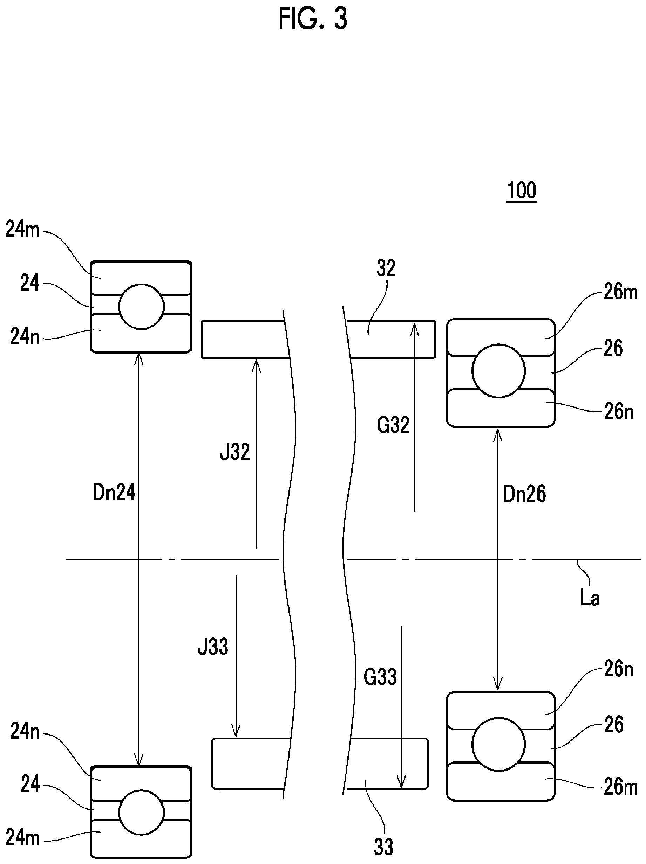

The feature configuration of the present embodiment will be described with reference to FIG. 3. FIG. 3 is a view schematically illustrating the disposition of the main bearings 24 and 26 of the wheel drive device 100. As illustrated in FIG. 3, the inner diameter (diameter) of an inner ring Dn24 of the inner ring 24n of the first main bearing 24 is larger than inscribed circle diameters (diameters) J32 and J33 of the pin members 32 and 33. In addition, the inscribed circle diameters (diameters) may be expressed as twice the shortest distance from the axial center of the output flange 18 to the pin member 32 or pin member 33. In this configuration, since an inner diameter Dn24 is large, a large-diameter bearing having a high load-bearing performance can be adopted as the first main bearing 24. As a result, since the load-bearing performance of the output flange 18 on the side to which the wheel 50 is connected is improved, the durability of the wheel drive device 100 is improved. Since the load-bearing performance is improved, the loadable load of the wheel drive device 100 is increased, and the size of the device can be reduced accordingly.

As illustrated in FIG. 3, the inner diameter Dn24 of the inner ring 24n of the first main bearing 24 is smaller than circumscribed circle diameters (diameters) G32 and G33 of the pin members 32 and 33.

In the present embodiment, the pin members 32 are inner pins that transmit the axial rotation component of the external gear 14 to the output flange 18. In this case, since the inner diameter Dn24 of the first main bearing 24 is larger than the inscribed circle diameter of each inner pin, the diameter of the fitting portion 18s to which the inner ring 24n of the output flange 18 fits can be increased in this vicinity region, and the load-bearing performance of the fitting portion 18s can be improved.

In the present embodiment, the pin members 33 are carrier pins that connect the output flange 18 and the carrier 20 to each other without contributing to the transmission of the axial rotation component of the external gear 14. In this case, since the inner diameter Dn24 of the inner ring 24n of the first main bearing 24 is larger than the inscribed circle diameter of the carrier pins, the diameter of the fitting portion 18s to which the inner ring 24n of the output flange 18 fits can be increased in this vicinity region, and the load-bearing performance of the fitting portion 18s can be improved.

In the present embodiment, the inner diameter (diameter) Dn26 of the inner ring 26n of the second main bearing 26 is smaller than inscribed circle diameters J32 and J33 of the pin members 32 and 33. In this case, since the inner diameter Dn26 is small, a lightweight small-diameter bearing can be adopted as the second main bearing 26.

In the present embodiment, the inner ring 24n of the first main bearing 24 faces the pin members 32 33 in the axial direction to restrict the axial movement of the pin members 32 and 33. In this case, since the movement of the pin members 32 and 33 can be restricted by the inner ring 24n, a configuration in which a separate member is not provided for the restriction of the movement may be selected. In addition, the inner ring 24n of the first main bearing 24 and the pin members 32 and 33 may face each other in the axial direction with a spacer or the like interposed therebetween.

The operation of the wheel drive device 100 configured in this way will be described. When the rotation is transmitted from the motor 40 to the input shaft 12, the eccentric body 12a of the input shaft 12 rotates around the rotation center line passing through the input shaft 12, and the external gear 14 oscillates. When the external gear 14 oscillates, the meshing position of the external gear 14 and the internal gear 16 shift sequentially. As a result, whenever the input shaft 12 makes one rotation, the rotation of one of the external gear 14 and the internal gear 16 is generated by the amount corresponding to a difference in number of teeth between the internal gear 16 and the external gear 14. In the present embodiment, the external gear 14 rotates, and this axial rotation component is transmitted to the output flange 18 via the pin members 32, and deceleration rotation is output from the output flange 18. As the output flange 18 rotates, the wheel 50 connected to the output flange 18 rotates. The above is the description of the first embodiment.

### [Second Embodiment]

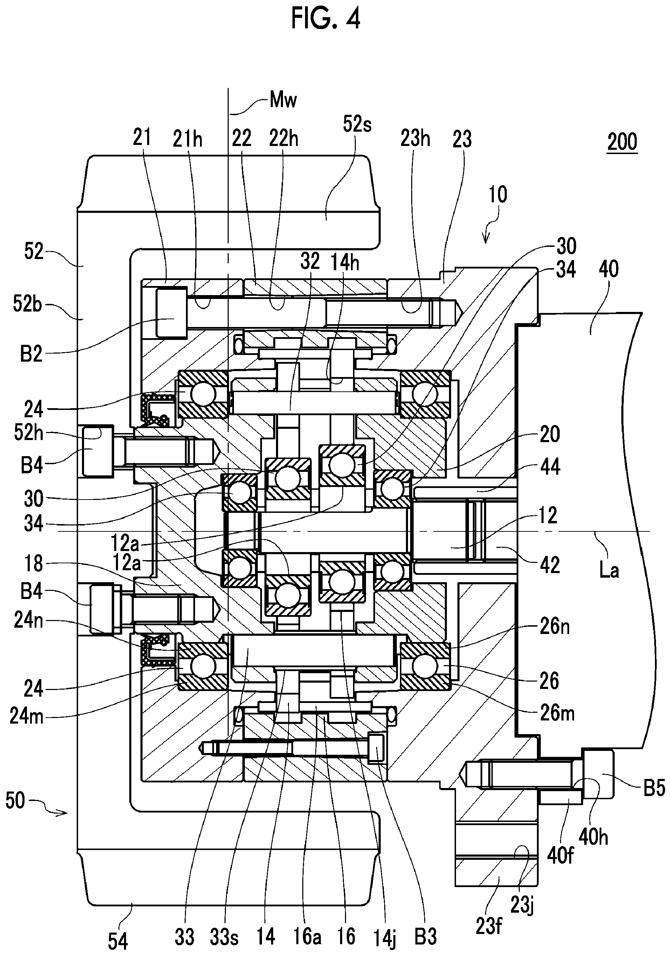

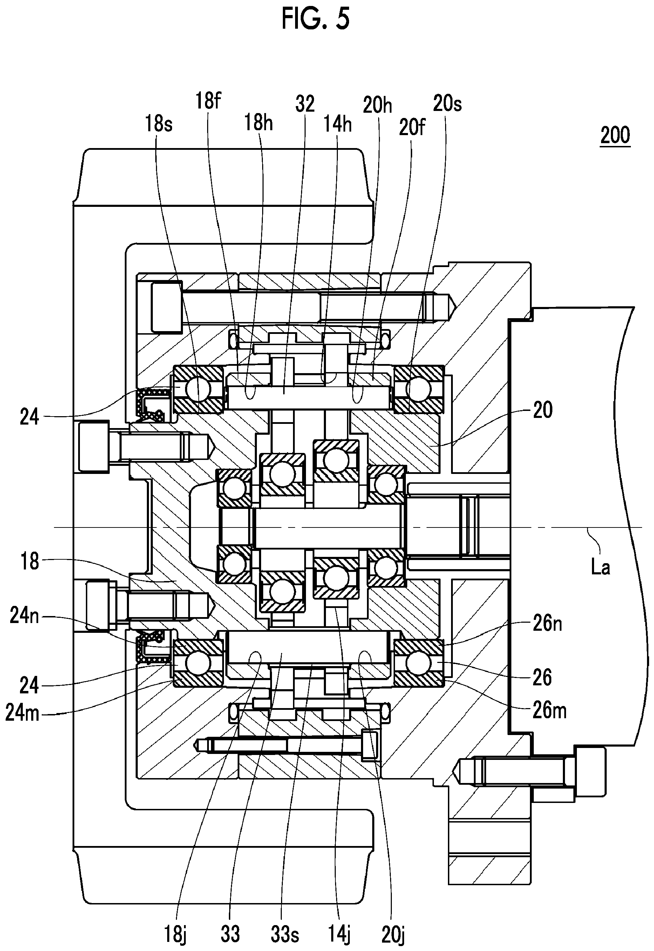

Hereinafter, the configuration of a wheel drive device 200 according to a second embodiment of the present disclosure will be described with reference to FIGS. 4 and 5. FIG. 4 is a cross-sectional side view schematically illustrating the wheel drive device 200 of the present embodiment. FIG. 5 is a view illustrating the output flange 18 and the carrier 20. In addition, in FIG. 5, the cross-sectional view itself is same as that of FIG. 4, and the reference numerals are different from those of FIG. 4.

The second embodiment is different from the first embodiment in that a relationship between the inner diameter Dn24 of the inner ring 24n of the first main bearing 24 and the inscribed circle diameters of the pin members 32 and 33 is different, the inner diameter Dn26 of the inner ring 26n of the second main bearing 26 is relatively large, and the other configurations are the same. Here, the differences will be mainly described by omitting duplicate descriptions. In this example, the inner diameter Dn26 is substantially equal to the inner diameter Dn24 of the inner ring 24n of the first main bearing 24. The second main bearing 26 may be the same bearing as the first main bearing 24.

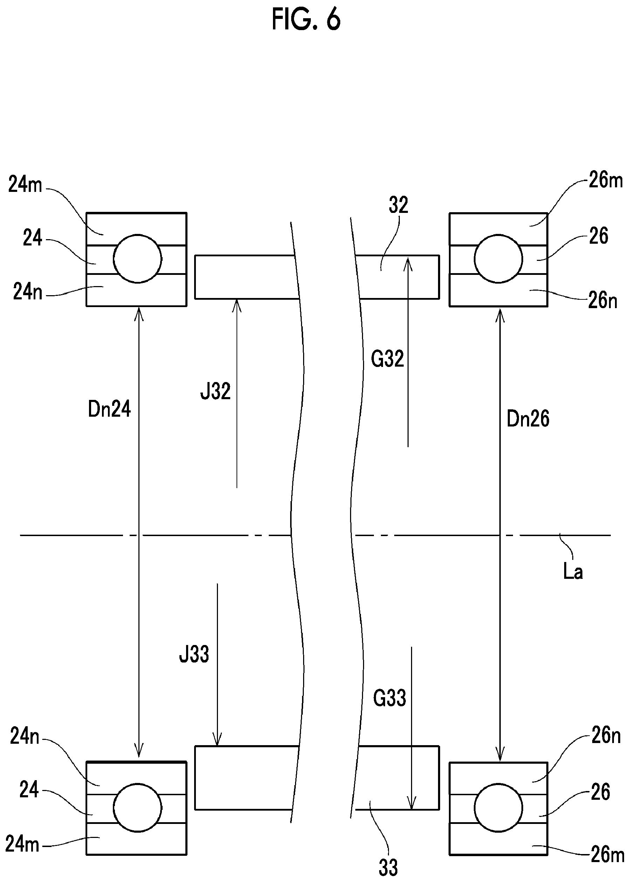

The feature configuration of the present embodiment will be described with reference to FIG. 6. FIG. 6 is a view schematically illustrating the disposition of the main bearings 24 and 26 of a wheel drive device 200.

In the present embodiment, as illustrated in FIG. 6, the inner diameter Dn24 of the inner ring 24n of the first main bearing 24 is smaller than the inscribed circle diameter J32 of the pin members 32 (inner pins) and is larger than an inscribed circle diameter J33 of the pin members 33 (carrier pins) . In this case, since the inner diameter Dn24 is larger than the inscribed circle diameter of the carrier pins, the diameter of the fitting portion 18s of the output flange 18 can be increased in this vicinity region, and the load-bearing performance of the fitting portion 18s can be improved.

In the present embodiment, the inner diameter Dn26 of the inner ring 26n of the second main bearing 26 is smaller than the inscribed circle diameter J32 of the pin member 32. In this case, since the inner diameter Dn26 is small, a lightweight small-diameter bearing can be adopted as the second main bearing 26.

In the present embodiment, the inner ring 24n of the first main bearing 24 faces the pin members 32 33 in the axial direction to restrict the axial movement of the pin members 32 and 33. In this case, since the movement of the pin members 32 and 33 can be restricted by the inner ring 24n, a configuration in which a separate member is not provided for the restriction of the movement may be selected.

The second embodiment operates similarly to the first embodiment and has the same actions and effects as those in the first embodiment. The above is the description of the second embodiment.

The examples of the embodiments of the present invention have been described in detail above. All of the aforementioned embodiments merely show specific examples for carrying out the present invention. The contents of the embodiment do not limit the technical scope of the present invention, and many design changes such as changes, additions, and deletions of components can be made without departing from the idea of the invention defined in the claims. In the aforementioned embodiments, the contents that can be changed in such designs are described with notations such as "of the embodiment" and "in the embodiment" but do not mean that design changes are not allowed for the contents without such notations. Additionally, the hatching given to the cross section of the drawing does not limit the material of a hatched object.

Hereinafter, modification examples will be described. In the drawings and description of modification examples, the same or equivalent components and members as those of the embodiments will be designated by the same reference numerals. The description that overlaps that of the embodiments will be appropriately omitted e, and the configuration different from that of the embodiment will be mainly described.

### [Modification Example]

In the description of the embodiments, an example in which the inner pins and the carrier pin are provided as the pin members has been shown, but it is not essential that the carrier pins are provided, and the carrier pins may not be provided.

In the description of the embodiment, an example in which the pin members 33 (carrier pins) are formed separately from the output flange 18 and the carrier 20 and connected to the output flange 18 and the carrier 20 has been shown, but the carrier pins maybe formed integrally with the output flange or the carrier .

In the description of the embodiments, an example in which the pin members 32 (inner pins) are rotatably supported with respect to the output flange 18 and the carrier 20 has been shown, but the present invention is not limited thereto. For example, the inner pins may be fixed to at least one of the output flange 18 or the carrier 20 or may be formed integrally with the output flange or the carrier. In this case, a rotatable sleeve may be placed on the outer peripheries of the inner pins.

In the description of the embodiments, an example in which the casing is constituted of three members (casings 21, 22, 23) is illustrated, but the casing may be constituted of two or less or four or more members.

In the description of the embodiments, an example in which the casing flange 23f for being connected to the external member is provided in the third casing 23 has been shown, but the casing flange may be provided on a member separate from the third casing 23, such as the first casing 21 and the second casing 22.

In the description of the embodiments, an example in which the reduction mechanism of the wheel drive device 100 is a center crank type eccentric oscillating reduction gear has been shown, but the present invention is not limited thereto. The reduction mechanism of the wheel drive device may have the output flange, the pin members, and the main bearings and may be capable of reducing the input rotation. For example, a so-called sorting type eccentric oscillating reduction gear, a simple planetary gear type reduction gear, or the like in which the crankshaft is provided at a position offset from the central axis line may be used. In addition, in the case of the sorting type eccentric oscillating reduction gear or the simple planetary gear type reduction gear, the inner pins may not be provided and only the carrier pins may be provided.

In the description of the embodiments, although an example in which the rolling elements of the respective bearings are spheres has been shown, bearings having rolling elements of a variety of known shapes can be used as the respective bearings.

The above-described respective modification examples have the same actions and effects as those of the embodiments.

Any combination of the components of the above-described embodiments and any of the modification examples is also useful as embodiments of the present invention. New embodiments resulting from the combination also have the respective effects of the combined embodiments and the modification examples.

### Brief Description of the Reference Symbols

- 12: Input shaft
- 12a: Eccentric body
- 14: External gear
- 16: Internal gear
- 18: Output flange
- 20: Carrier
- 21, 22, 23: Casing
- 24: First main bearing
- 24n: Inner ring
- 26: Second main bearing
- 26n: Inner ring
- 32, 33: Pin member
- 50: Wheel
- 100, 200: Wheel drive device

## Claims

1. A wheel drive device (100, 200) comprising:
an internal gear (16) that is integrated with a casing (21, 22, 23);
an external gear (14);
an eccentric body (12a) that oscillates the external gear (14) ;
an output flange (18) that is disposed at a side portion of the external gear (14) in an axial direction thereof;
a pin member (32, 33) that is supported on the output flange (18) and penetrates the external gear (14); and
a firstmainbearing (24) that is disposed between the output flange (18) and the casing (21, 22, 23), a wheel (50) being connected to the output flange (18),
wherein an inner diameter of an inner ring (24n, 26n) of the first main bearing (24) is larger than an inscribed circle diameter of the pin member (32, 33).

2. The wheel drive device (100, 200) according to claim 1,
wherein the pin member (32, 33) is an inner pin that transmits an axial rotation component of the external gear (14) to the output flange (18).

3. The wheel drive device (100, 200) according to claim 1 or 2, further comprising:
a carrier (20) that is disposed on a side opposite to the output flange (18) in the axial direction of the external gear (14), and the pin member (32, 33) is a carrier pin that connects the output flange (18) and the carrier (20) to each other without contributing to transmission of an axial rotation component of the external gear (14).

4. The wheel drive device (100, 200) according to any one of claims 1 to 3, further comprising:
a carrier (20) that is disposed on a side opposite to the output flange (18) in the axial direction of the external gear (14); and
a second main bearing (26) that is disposed between the casing (21, 22, 23) and the carrier (20),
wherein an inner diameter of an inner ring (24n, 26n) of the second main bearing (26) is smaller than the inscribed circle diameter of the pin member (32, 33).

5. The wheel drive device (100, 200) according to any one of claims 1 to 4,
wherein the inner ring (24n, 26n) of the first main bearing (24) faces the pin member (32, 33) in the axial direction to restrict an axial movement of the pin member (32, 33).

6. The wheel drive device (100, 200) according to any one of claims 1 to 5, further comprising:
a carrier (20) that is disposed on a side opposite to the output flange (18) in the axial direction of the external gear (14); and
a second main bearing (26) that is disposed between the carrier (20) and the casing (21, 22, 23),
wherein a center position of an axial width of the wheel (50) is closer to the first main bearing (24) than to the second main bearing (26).
